# EUROPEAN PATENT APPLICATION

(11) **EP 4 694 394 A1**
(43) Date of publication of application: **11.02.2026**
(21) Application number: 24193844.8
(22) Date of filing: 09.08.2024
(51) Int. Cl.: H04W 52/36

(54) **COMMUNICATION APPARATUS AND BASE STATION INVOLVED IN POWER HEADROOM REPORTING**

(71) Applicant: Panasonic Intellectual Property Corporation of America, Torrance, CA 90504 (US)
(72) Inventor: ZEINEDDINE, Khalid, 63225 Langen (DE); SUZUKI, Hidetoshi, Osaka, 571-8501 (JP)
(74) Representative: Grünecker Patent- und Rechtsanwälte PartG mbB

(57) **Abstract**

Provided are a communication apparatus, a base station, and communication methods for a communication apparatus and, respectively, a base station. The communication apparatus comprises: a transceiver, which, in operation, receives a request for a power headroom report, PHR; and circuitry, which, in operation, generates the requested PHR. The transceiver, in operation, transmits the requested PHR.

## Description

### BACKGROUND

### 1. Technical Field

The present disclosure relates to transmission and reception of signals in a communication system. In particular, the present disclosure relates to methods and apparatuses for such transmission and reception.

### 2. Description of the Related Art

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

### SUMMARY

In an embodiment, the techniques disclosed here feature communication apparatus, comprising: a transceiver, which, in operation, receives a request for a power headroom report, PHR; and circuitry, which, in operation, generates the requested PHR. The transceiver, in operation, transmits the requested PHR.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

### BRIEF DESCRIPTION OF DRAWINGS

- **Fig. 1**: shows an exemplary architecture for a 3GPP NR system;
- **Fig. 2**: is a schematic drawing illustrating syntax of an Enhanced Single-Entry PHR MAC CE.
- **Fig. 3**: is a schematic drawing illustrating syntax of an Enhanced Single-Entry PHR for multiple TRP MAC CE.
- **Fig. 4**: shows an exemplary communication system comprising a user equipment, a base station, and an uplink TRP;
- **Fig. 5**: shows another exemplary communication system comprising a user equipment, a base station, and an uplink TRP;
- **Fig. 6**: is a block diagram showing a communication apparatus and a base station;
- **Fig. 7**: is a block diagram showing exemplary PHR handling circuitry of a communication apparatus;
- **Fig. 8**: is a block diagram showing exemplary PHR handling circuitry of a base station;
- **Fig. 9**: is a flow chart showing steps of a communication method for a communication apparatus;
- **Fig. 10**: is a flow chart showing steps of a communication method for a base station;
- **Figs. 11 and 12**: are flow chart showing steps of a communication method for a communication apparatus according to some embodiments; and
- **Fig. 13**: shows exemplary functional split options in 5G O-RAN.

### DETAILED DESCRIPTION

### 5G NR system architecture and protocol stacks

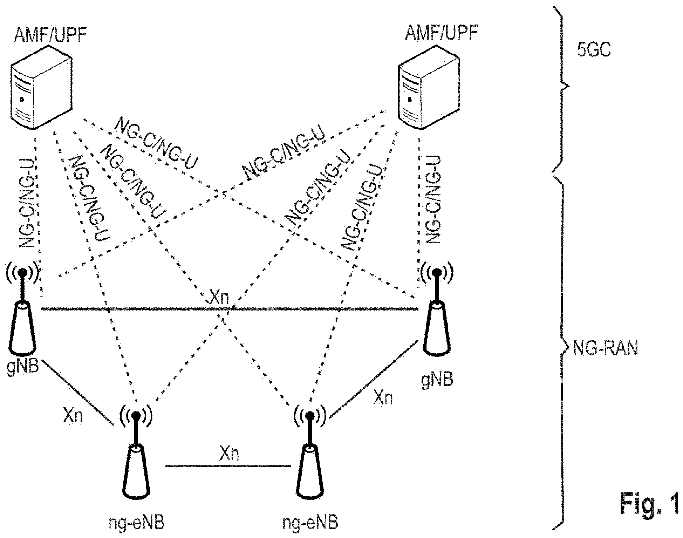

5G NR system architecture assumes an NG-RAN (Next Generation - Radio Access Network) that comprises gNBs, providing the NG-radio access user plane (SDAP/PDCP/RLC/MAC/PHY) and control plane (RRC) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing the AMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

### RRC connection setup and reconfiguration procedures

Interactions between a UE, gNB, and AMF (a 5GC entity) in the context of a transition of the UE from RRC_IDLE to RRC_CONNECTED for the NAS part are described (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

### QoS Control

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

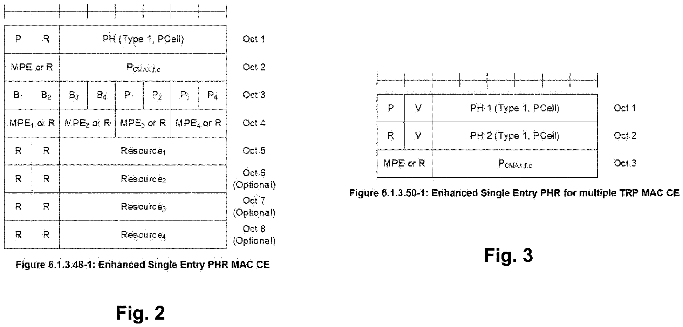

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

### Power headroom reporting

The amount of transmission power available in a communication device, e.g. a scheduled UE, is important information for the uplink scheduler. In particular, the scheduler may refer to the available transmission power in the allocation of an amount of frequency resources to scheduled devices as well as in the selection of a modulation and coding scheme for a scheduled uplink transmission, where it is decided how many bits per symbol the scheduled device is able to transmit.

A power headroom (more specifically a type 1 power headroom level) or a power availability is a measure of difference between maximum per carrier of a transmit power (P_{cmax,f,c}) and the scheduled PUSCH transmit power. *P_{cmax,f,c}(i)* is the maximum output power configured by a UE and defined, for example, in Section 8-1 of 3GPP TS 38.101-1, Section 8-2 of 3GPP TS 38.101-2 and Section 8-3 of 3GPP TS 38.101-3 for a carrier f of a serving cell c in PUSCH transmission occasion i. In the above definition of the power headroom, no upper limit is assumed for the scheduled transmit power, and the scheduled transmit power is therefore not necessarily the same as the actual transmit power. The power headroom can take negative values, for instance when the network scheduled a UE with a higher data rate than the UE support.

Power headroom reports (PHR) are transmitted via MAC-CE from the UE to the network. CE stands for control element and it is a syntax element of the MAC (Medium Access Control) protocol. The PHRs can be transmitted periodically or triggered by a change in downlink pathloss. PHR MAC-CE is transmitted on the next available UL grant. Types of PHRs in specified in 3GPP NR include the following types (see for example 3GPP TS 38.321 V18.2.0 (2024-06), "NR; Medium Access Control (MAC) protocol specification", section 5.4.6):
- **Type 1** reflects power headroom assuming PUSCH-only transmission on the carrier (actual and virtual transmission);
- **Type 2** reflects the power headroom assuming simultaneous PUSCH and PUCCH reporting (support by 3GPP TS 38.213 V18.3.0 (2024-06); "NR; Physical layer procedures for control", Type 2 PHR is yet to be specified, as per V18.3.0 (2024-06; and
- **Type 3** used to handle SRS (sounding reference signal) switching, i.e., SRS transmissions on an uplink carrier where the device is not configured to transmit PUSCH.

In releases 17 and 18, several enhanced power headroom reporting (PHR) MAC-CEs (see 3GPP TS 38.321 V18.2.0 (2024-06), "NR; Medium Access Control (MAC) protocol specification", for example Section 6.1.3.48-51) were introduced.

In the following, two CEs are exemplified. In particular, 3GPP TS 38.321 in Section 6.1.3.48 is illustrated in Fig. 2 and shows the Enhanced Single Entry PHR MAC CE, which allows UE to report the following:
- power headroom type-1 for PUSCH.
- The applied power backoff (P-MPR) to meet maximum permissible exposure (MPE) requirement.
- Indices of up to 4 beams from an RRC configured MPE reporting beam pool.
- The applied power backoff to meet maximum permissible exposure (MPE) requirements for the reported beams above.

In particular, in Fig. 2, each row illustrates an octet (8 bits) - the position of bits of the octet are schematically indicated by the vertical lines on the top of the first row. Fig. 2 shows fields of the Enhanced Single Entry PHR MAC CE. Bᵢ field indicates whether the candidate beam information identified by Resourceᵢ is present or not. If the B₁ field is set to 1, the first octet containing Resource, is present, and if the B₂ field is set to 1, the second octet containing Resource₂ is present, and so on. Regarding Pᵢ, if *mpe-Reporting-FR2-r17* element of RRC is configured and the Serving Cell operates on FR2, the MAC entity shall set this field to 0 if the applied P-MPR value is less than P-MPR_00 and to 1 otherwise. P-MPR is a power management maximum power reduction. In release 17, this field indicates an index to Table 6.1.3.8-3 (in the 3GPP TS 38.321) and the corresponding measured values of P-MPR levels in dB are specified in 3GPP TS 38.133. MPEᵢ setting is performed as follows: if *mpe-Reporting-FR2-r17* is configured, and the Serving Cell operates on FR2, and if the corresponding Pᵢ field is set to 1, this field indicates the applied power backoff. The length of the field is 2 bits. If *mpe-Reporting-FR2-r17* is not configured, or if the Serving Cell operates on FR1, or if the Pᵢ field is set to 0, R bits are present instead. Resourceᵢ field indicates the candidate beam identified by the number of entries in the corresponding *mpe-ResourcePoolToAddModList* specified by the RRC protocol. The length of this field 6 bits.

On the other hand, 3GPP TS 38.321 in Section 6.1.3.50 shows an Enhanced Single Entry PHR MAC CE for multiple TRP and is illustrated in Fig. 3.

This Enhanced Single Entry PHR MAC CE for multiple TRP allows UE to report the following:
- PH reporting for multiTRP PUSCH repetition scheme in release 17.
- Two power headroom type-1, where PH 1 is associated with the SRS-ResourceSet with a lower srs-ResourceSetId and PH 2 is associated with the SRS-ResourceSet with a higher srs-ResourceSetId.
- Virtual PH level reporting (virtual power headroom is the power headroom calculated not based on an actual transmission but based on a reference format configured by higher layer signaling).

In particular, Power Headroom i (PH i) field indicates the power headroom level, where PH 1 is associated with the *SRS-ResourceSet* with a lower *srs-ResourceSetId* and PH 2 is associated with the SRS-ResourceSet with a higher *srs-ResourceSetId.* PH fields for a Serving Cell are included in ascending order based on i. The length of the field is 6 bits. SRS-*Resource Set, and srs-ResourceSetId* are RRC information elements that specify sounding reference signal (SRS) resource sets.

The V field indicates if the PH value for the corresponding TRP is based on a real transmission or a reference format. For Type 1 PH, the V field set to 0 indicates real transmission on PUSCH and the V field set to 1 indicates that a PUSCH reference format is used.

The gNB and UE can use a so-called Transmission Configuration Indication (TCI) signaling framework. That means that the beam for a target channel, like a PDSCH, PDCCH, or a target reference signal (such as a channel state information reference signal, CSI-RS) can be indicated from a gNB to a UE by a specific TCI state. The TCI state can be used by the UE for receiving the target channel or target signal. A TCI state defines parameters for defining a quasi-co-location (QCL) relationship between a source reference signal (RS) and the target channel or target signal. Simplifying, when the source signal and target signal are QCLed (Quasi Co-Located), the two signals may have gone through (very) similar channel condition(s), e.g. same place and same antenna, using same spatial filter, etc. Accordingly, by measuring the source reference signal, the UE can appropriately set the reception coefficients (e.g. a spatial filter) and/or tune the reception antenna for the reception of the target channel/signal based on the source reference signal.

In more detail, the similarity of the channel conditions for the QCL can be influenced by different parameters which two signals might share, including for instance one or more of:
- Doppler Shift
- Doppler Spread
- Average Delay
- Delay Spread
- Spatial Rx parameter

Correspondingly, different types of QCL can be defined in 5G NR systems, such as

| | |
|---|---|
| Type | Description |
| QCL-TypeA | Doppler shift, Doppler spread, average delay, delay spread |
| QCL-TypeB | Doppler shift, Doppler spread |
| QCL-TypeC | Doppler shift, average delay |
| QCL-TypeD | Spatial Rx parameter |

In frequency range 1 (FR1, below 7.125 GHz) QCL Types A-C, and in frequency range 2 (FR2, above 24.250 GHz) QCL types A-D are applicable. For instance, the QCL Type D for FR2 indicates that a target signal (such as the PDCCH/PDSCH/CSI-RS) is transmitted with the same spatial filter as the source reference signal associated with that TCI State.

For example, a TCI state may e.g. resemble a spatial filter used for transmission and reception to/from a transmission point or TRP (Transmission Reception point).

In Release 17, a unified TCI framework has been introduced, allowing a TCI state to be commonly applied to both DL and UL channels/signals including not only downlink but also target uplink channels, like PUSCH or PUCCH, or target uplink reference signals, like a sounding reference signal (SRS); such a TCI state can be called "joint TCI state". On the other hand, Release 17 supports alternatively the possibility that a UL transmission can have a separate "TCI UL state".

An exemplary TCI state operation involves the following:
- Step 1: The UE is configured with a list of TCI states, e.g. by higher-layer signaling (such as RRC signaling) from a gNB, and possibly depending on the UE capability.
- Step 2: A subset of TCI states, among all the configured TCI states is then activated. For example, the UE receives a medium access control, MAC, control element, CE, message from the gNB for activating a subset of e.g. up to 8 TCI states among the preconfigured TCI states. Each activated TCI state is mapped by the UE to one codepoint (e.g. 3 bits) that can be indicated by the DCI field *"Transmission Configuration Indication".*
- Step 3: One out of the 8 activated TCI states is then actually used by the UE to receive a target channel/signal. For example, the UE receives a DCI signal, which indicates one of the codepoints in the DCI field *"Transmission Configuration Indication".* The UE applies the indicated codepoint to the target channel(s) or target signal(s).

### Multiple transmission and reception points

The physical layer in NR may provide multi-antenna operation such as MIMO (multiple input, multiple output) which may, for instance, include the use of plural or multiple transmission and reception points (multi-TRP). For instance, a user equipment may receive data from plural TRPs (transmission and reception points), wherein the plural-TRPs may be controlled by the same or different network nodes. The terms multi-point transmission or coordinated multi-point transmission (CoMP) may also be used for multi-TRP communication including multi-TRP transmission.

In 3rd generation partnership project (3GPP) in new radio (NR) Rel. 15, basic support for multiple transmission and reception point (multi-TRP) was specified. In NR Rel. 16 multi-TRP may further be enhanced in accordance with a new work item on NR MIMO (cf. RP-182067, 'Revised WID (work item description): Enhancements on MIMO for NR', Samsung, 3GPP TSG RAN (Technical Specification Group Radio Access Network) Meeting #81, Gold Coast, Australia, Sept 10 - 13, 2018).

For instance, multi-TRP operation may be performed by a gNB having different antenna panels or radio heads corresponding to the TRPs and different radio frequency units operating with the respective antennas.

Moreover, in multi-TRP, several options are conceivable with respect to the positional relationship between TRPs, and the distance between two TRPs may vary. For instance, the TRPs may be close, so that a UE receives signals from these TRPs from a similar angle. However, TRPs may also be located at a rather far distance from each other, for instance at remote locations of a network cell. A UE being served by the two TRPs may receive and transmit the signaling from and to the respective TRPs on uncorrelated channels. Accordingly, gains in channel diversity may be optimally utilized.

### Asymmetric single-TRP / multi-TRP deployment scenarios

For Release 19 MIMO evolution, the specification of enhancements in asymmetric DL single-TRP (sTRP) / UL multi-TRP (mTRP) deployment scenarios is studied as an objective of a work item (see 3GPP TSG RAN Meeting #102, Edinburgh, Scotland, December 11-15, 2023, NR MIMO Phase 5, RP-234007, item 5 in section 4.1). Therein, intra-band intra-DU non-co-located mTRP scenarios are assumed. Moreover, the specification shall be made without changing existing cell definition or defining a new cell (e.g. UL-only cell). Further, the Rel-17/18 unified TCI framework and fully reusing the legacy QCL/UL spatial relation rules, targeting FR1 and FR is assumed. Targets of development include two closed-loop power control (PC) adjustment states for SRS both separate from PUSCH; and pathloss offset configurations for pathloss (PL) calculation to UL TRP(s), when the pathloss RS (reference signal) is from a DL sTRP. In the following, pathless offset is denoted as ΔPL.

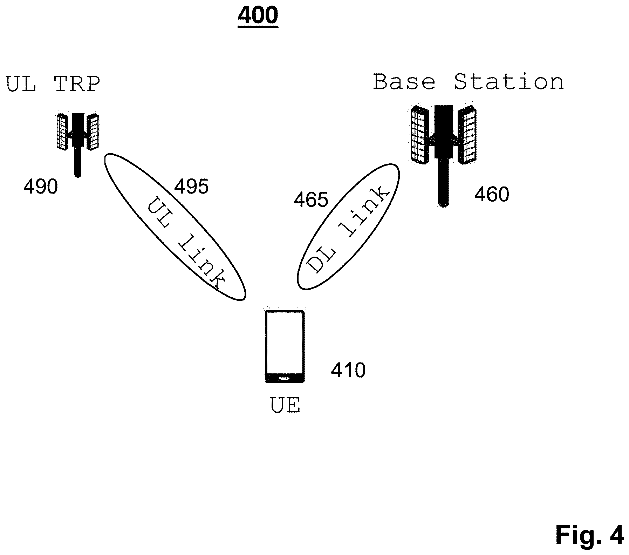

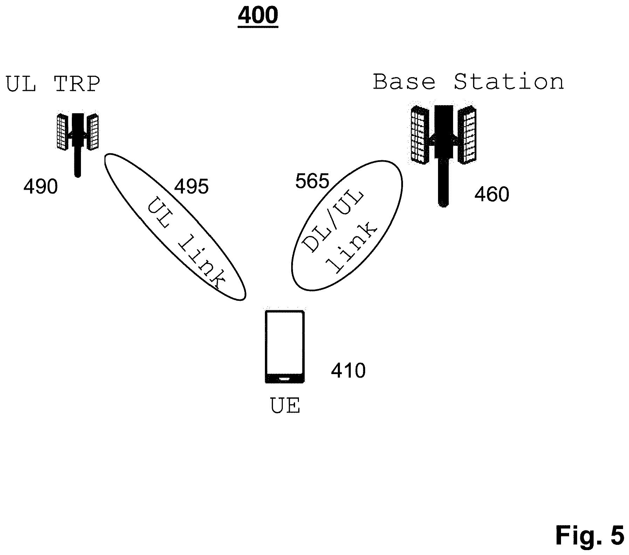

Asymmetric TRP scenarios are illustrated in **Fig. 4** and **Fig. 5****,** where, in addition to a base station 460 serving a UE and transmitting to the UE on a downlink 465, an UL TRP 490 (e.g. an UL-only TRP or UL-only node) is provided, to which the UE performs transmissions on an uplink 495 but from which the UE does not receive on a downlink (Fig. 4). In an asymmetric DL sTRP/UL mTRP deployment scenario, as shown in Fig. 5, the UE 410 and the base station 460 may communicate on a bidirectional (UL/DL) link 565 while the additional UL TRP 490 only receives on the uplink 495.

### Downlink Pathloss and Pathloss Offset

UL-only nodes or TRPs may be deployed without change in the specification since there is nothing that prevents the NWfrom deploying nodes without DL transmissions. In this case, the UL reception in such UL only nodes may be based on power control that is performed with based channel characteristics and pathloss on the link between the UE and the DL TRP or base station from which the UE receives DL transmissions. The power control for UL transmissions to the UL TRP may be may be based on the assumption that the channel characteristics between the UE and the UL TRP are similar to channel characteristics between the UE and a DL TRP or base station from which the UE receives on the downlink. A sufficient correlation between the DL TRP-to-UE and the UE-to-UL-TRP link characteristics may require restrictions such as a limit on the maximal supported difference between DL TRP-to-UE distance and UE-to-UL-TRP distance.

In the absence of such restriction on deployment, the pathloss measured using the pathloss RS transmitted on the DL channel might not reflect the value of the real pathloss from the UE to the UL TRP. RAN1 agreed to support using a pathloss offset that reflects the difference between the pathloss from the DL-TRP to UE and the pathloss from the UE to UL TRP.

Regarding the above-mentioned targeted pathloss offset, the following agreements have been made by RAN1.

Firstly, when a UL TCI state associated with a PL offset is applied for the PUSCH, PUCCH, or SRS transmission, the UE shall calculate the Tx (transmission) power of the PUSCH/PUCCH/SRS based on the downlink PL RS and PL offset associated with this UL TCI state. Secondly, for the association between PL offset and joint/UL TCI state, one PL offset value is configured in a joint or UL TCI state by RRC, where different PL offset values can be configured to different joint or UL TCI states. A MAC CE can update the PL offset value(s) for joint or UL TCI state(s).

### Further issues

As mentioned, in legacy NR, PHR reports can be transmitted periodically (it is noted that "PHR report" and "PHR" are used interchangeably). However, periodic PHR reporting by the UE may induce latency.

Alternatively, in legacy NR, PHR reports can be triggered by a change in downlink pathloss. Therein, the UE transmits the PHR when the change in the downlink pathloss change is greater than a certain threshold, the UE transmits PHR.

The uplink transmission power is proportional to (P₀ +αPL_{DL}) where P₀ is the target receive power, α is the fractional path-loss compensation and PL_{DL} is the downlink pathloss. Therefore, in legacy, the downlink pathloss can be used as an indication of the change in the uplink transmission power, which is an indication that the PH may also change.

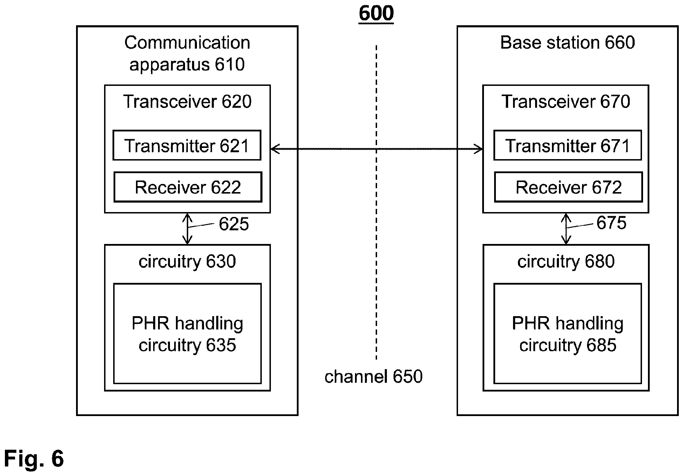

However, the inventors have noted that in deployment scenarios with UL TRPs, such as the asymmetric scenarios as shown in **Figs. 5** and **6****,** the change in the downlink pathloss does not necessarily represent a change in the uplink transmission power. As an example, a UE may move on a circle around the UL TRP, where the distance to the base station changes, but the distance to the uplink TRP stays approximately the same. The change in downlink pathloss following legacy procedure might trigger power headroom reporting although it might not be be necessary, which reduces throughput of the uplink channel. Therefore, triggering of PHR by a change in the downlink pathloss PL_{DL} is not a reliable mechanism e.g. in UL TRP deployment scenarios.

A possible approach for power headroom triggering for deployment scenarios with UL TRPs may be to replace PL_{DL} with (PL_{UL} = PL_{DL} - ΔPL) as a trigger. However, the update of the pathloss offset ΔPL and the frequency of the ΔPL update is up to the implementation of the network or base station. For instance, the base station may apply closed loop power control, which is a feedback loop based mechanism where the base station controls the UE's uplink power with step-wise increase or decrease commands signaled via DCI. With such closed-loop control, it may be unnecessary or unfeasible for the base station to regularly update the pathloss offset. Thus, it may not be guaranteed that ΔPL is always updated by the network. When ΔPL is outdated, triggering of PHR by PL_{UL} change is not a reliable mechanism, either.

### Further modifications

In view of the above issues, the present disclosure suggests using changes in the received uplink power from the UE, for instance in deployment scenarios with uplink TRPs. The inventors have noted that since the network is able to detect changes in the received uplink power from the UE, it does not need to rely on changes in downlink pathloss PL_{DL} to trigger PHR transmission from the UE to the network.

The present disclosure provides techniques for the UE to receive a power headroom reporting request on a DL channel by the NW and to transmit a power headroom report on an uplink channel. A feature provided by this this disclosure relates to the request for the PHR being sent from the network to the UE via the downlink channel, e.g. dynamically. A further feature will also be described, which relates to the UE determining uplink resources for transmitting the requested PHR report.

As shown above, periodic PHR reporting by UE may induce latency, and a change in the pathloss as a trigger of PHR may not be reliable in UL TRP deployment scenarios when the UE uses the pathloss (DL pathloss or UL pathloss determined based on ΔPL) as a trigger for the PHR. On the other hand, the NW can measure the change in uplink received power from the UE and this may reflect more reliably the changes in the UE uplink transmit power. In view of these considerations, it is an approach of the present disclosure to enable the NW to request a PHR report from the UE instead. Provided are methods and devices for network-triggered reporting of UE Uplink Power Headroom.

### Embodiments

In the following, UEs, base stations, integrated circuits and respective procedures to meet these needs will be described for the new radio access technology envisioned for the 5G mobile communication systems, but which may also be used in previous LTE-based mobile communication systems or future (e.g. 6G) mobile communication systems. In particular, while 3GPP is currently developing Rel. 18 and 19 of the 5G (-Advanced) mobile communication system, 3GPP has already started planning for the next generation, 6G, of communications systems.

Different implementations and variants will be explained as well. The following disclosure was facilitated by the discussions and findings as described above and may for example be based at least on part thereof.

In general, it should be noted that many assumptions have been and are made herein so as to be able to explain the principles underlying the present disclosure in a clear, concise and understandable manner. These assumptions are however to be understood merely as examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to terminology used in the current 3GPP 5G standardization (possibly also used before in LTE/LTE-A systems), even though specific terminology to be used in the context of the new radio access technology for the next communication systems (e.g. 6G) may not be fully decided yet or might finally change. Thus, terms could be changed in the future, without affecting the functioning of the respective features and solutions. Consequently, a skilled person is aware that the solutions and their scope of protection should not be restricted to particular terms exemplarily used herein for lack of newer or finally agreed terminology, but should be more broadly understood in terms of functions and concepts that underlie the solutions explained in the present disclosure.

For instance, a mobile station or mobile node or user terminal or user equipment (UE) is a physical entity (physical node) within a communication network. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

The term "base station" or "radio base station" here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. Moreover, the base station may also be a gNB in a Non-Terrestrial Network (NTN) NR system.

Communication between the UE and the base station is typically standardized and may be defined by different layers, such as PHY, MAC, RRC, etc.

Fig. 6 illustrates a general, simplified and exemplary block diagram of a communication apparatus (which may be exemplarily assumed to be a user equipment (UE) 610 or communication terminal or communication apparatus) and a scheduling device or scheduling node (here exemplarily assumed to be located in network node such as a base station 660, e.g. in a LTE eNB (alternatively termed ng-eNB) or the gNB in 5G NR) in the communication system 600. However, in general, a scheduling device may also be a terminal in case of a sidelink connection between two terminals. Moreover, in particular with respect to the use cases of URLLC (ultra reliable low latency communication), eMBB (enhanced mobile broadband), and mMTC (massive machine type communication), the communication apparatus 610 may also be a sensor device, a wearable device, or a connected vehicle, or a controller of an automated machine in an industrial factory.

As illustrated in **Fig. 6****,** the user equipment 610 and the scheduling device or network node 660 (eNB/gNB) may communicate with each other over a (wireless) physical channel 650 respectively using their transceivers 620 (communication apparatus side) and 670 (base station side). Together, the network node 660 and the user equipment 610 may form the communication system 600. The communication system 600 may further include other entities such as those shown in **Fig. 1****,** e.g. a plurality of UEs connected to the base station or a relay node relaying signals to/from the base station from/to one or more UEs, or a plurality of base stations each serving in one or more serving cells.

As illustrated in **Fig. 6****,** the user equipment 610 may comprise a transceiver 620 (e.g. including a transmitter 671 and/or a receiver 672) and circuitry (or processing and/or control circuitry) 630, and the network node 660 may comprise a transceiver 670 (e.g. including a transmitter 671 and/or a receiver 672) and (processing and/or control) circuitry 680.

The term ***"transceiver"*** refers to a front end including one or more antenna (more than one antenna in case beamforming is used). A transceiver here can further include an amplifier, some modulators for modulation of the baseband signal onto the system carrier, possibly also the D/A converter and possibly further signal improvement circuitry. In general, a transceiver may comprise and/or function as a receiver and/or a transmitter. In this disclosure, in other words, the term *"transceiver"* is used for hardware and software components that allow a communication apparatus (or "communication device") to transmit and/or receive radio signals over a wireless channel. Accordingly, a transceiver corresponds to a receiver, a transmitter, or a combination of receiver and transmitter. Typically, a base station and a communication device are assumed to be capable of transmitting as well as receiving radio signals. However, particularly with respect to some applications of eMBB, mMTC and URLLC (smart home, smart city, industry automation etc.), cases are conceivable in which a device, such as a sensor, only receives signals. A transmitter may be responsible for performing the process of transmitting and other processes related thereto. A receiver may be responsible for performing the process of receiving and other processes related thereto, such as monitoring a channel. In general, a transceiver may be controlled by a circuitry to perform said transmitting and/or receiving.

The term ***"circuitry"*** herein refers to any hardware and/or software. For example, the circuitry may include one or more processors (or processing units or any LSIs), microcontrollers, programmable hardware such as FPGA(s) (field programmable gate array) and/or dedicated hardware such as ASIC(s) (application-specific integrated circuit) or the like, possibly further including further digital or analog circuits.

Between the transceiver and the processing circuitry there may be an input/output point (or node) over which the processing circuitry, in operation, can control the transceiver, i.e. control the receiver and/or the transmitter and exchange reception/transmission data. The processing circuitry may implement control tasks such as controlling the transceiver to transmit user data and control data provided by the processing circuitry and/or receive user data and control data, which is further processed by the processing circuitry. The processing circuitry may also be responsible for performing other processes such as determining, deciding, calculating, measuring, etc.

As mentioned, the communication apparatus 610 and the base station 660 communicate over a channel 650, which may be wireless. For instance, the communication system 600 may be a wireless communication system, communication apparats 610 may be wireless communication apparatus (or radio communication apparatus), and base station 660 may be a base station for wireless communication or a radio base station.

In the exemplary user equipment 610, the circuitry 630 may control the transceiver 620, which may include the transmitter 621 and the receiver 622, to receive and/or transmit data. This is illustrated by an arrow 625 which represents schematically an interface between the circuitry 630 and the transceiver 620, over which the control is performed.

In the exemplary network node 660, the circuitry 680 may control the transceiver 670 to receive and/or transmit data. This is illustrated by an arrow 675, which represents schematically an interface between the circuitry 680 and the transceiver 670, over which the control is performed.

As mentioned above, references to 5G New Radio communication systems are merely exemplary, and the present invention is applicable to other communication systems including present and future standards. Moreover, short expressions "UE" and "gNB" may be used for the reader's convenience, and descriptions of behavior of a "UE" and "gNB" in the description can more generally be applied to a communication apparatus or a base station. Further, the expressions "UE" and "gNB" before "circuitry", "transmitter", "receiver" and "transceiver" may be used for short to distinguish the transceivers and circuitries of a communication apparatus 610 and a network node 660, without implying any limitation to networks such as 3GPP NR networks.

As shown in **Fig. 6****,** provided is a communication apparatus 610 comprising a transceiver 620 and circuitry 630. The transceiver 620, in operation, receives a request for a power headroom report (PHR), the circuitry 630, in operation, generates the requested PHR, and the transceiver 620, in operation, transmits the requested PHR.

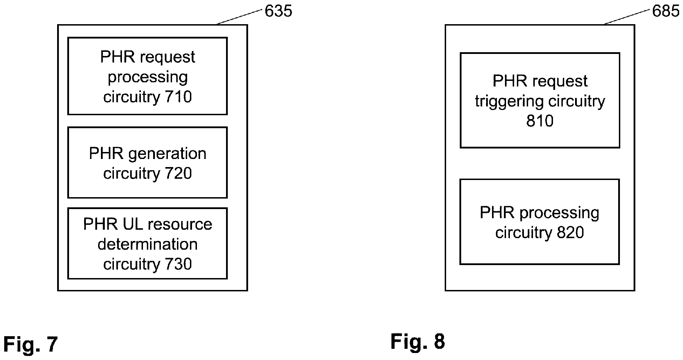

The UE circuitry 630 may be exemplarily considered to comprise PHR handling circuitry 635. Further, as shown in **Fig. 7****,** the PHR handling circuitry 635 may be considered to comprise PHR request processing circuitry 710 which processes (e.g. encodes and/or interprets) the received PHR request, PHR generation circuitry 720 which generates the power headroom report, as well as PHR UL resource determination circuitry 730 which may determine uplink resources for transmitting the PHR resource, wherein the determination may include determining available uplink resources based on a received uplink grant. However, it should be noted that the PHR handling circuitry 635 shown in **Fig. 6** and its (sub-) circuitries 710 to 730 shown in **Fig. 7** are merely exemplary, and the circuitry 630 communication apparatus 610 of the present disclosure need not comprise dedicated circuitries for the respective processing tasks.

As also shown in **Fig. 6****,** provided is a base station 660 comprising a transceiver 670 and circuitry 680. The circuitry, in operation, determines to request a power headroom report, and the transceiver 670, in operation, transmits the PHR request based on a result of the determination, and receives the requested PHR.

The gNB circuitry 685 may be exemplarily considered to comprise PHR handling circuitry 685. As shown in **Fig. 8****,** the PHR handling circuitry 685 of the base station 660 may comprise PHR request triggering circuitry 810, which determines to request (or whether to request) the PHR, and PHR processing request 820, which processes the received request. For instance, the processing of the PHR may include evaluating the PHR and determining the UE's power headroom to be considered in the scheduling of UL resources and/or in the determination of UL transmission parameters. However, it should be noted that the PHR handling circuitry 685 shown in **Fig. 6** and its (sub-) circuitries 810 and 820 shown in **Fig. 8** are merely exemplary, and the circuitry 680 of base station 660 of the present disclosure need not comprise dedicated circuitries for the respective processing tasks.

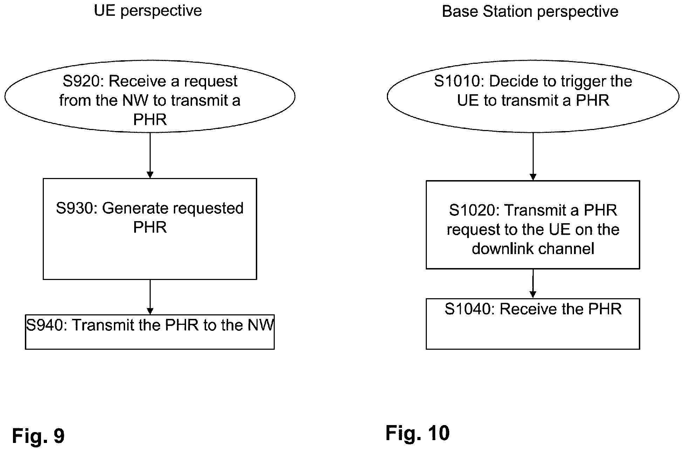

In correspondence with the above described communication apparatus 610, provided is a communication method for a communication apparatus. As shown in Fig. 9, the UE communication method comprises a step S920 of receiving a request for a power headroom report. In step S920, the request is received from the network (NW), e.g. from a base station 660. The UE communication method further comprises a step S930 of generating the requested PHR, and a step S940 of transmitting the PHR to the NW.

Moreover, in correspondence with the above-described base station 660, provided is a communication method for a base station. As shown in **Fig. 10****,** the gNB communication method comprises a step S1010 of determining to request (or whether to request) a power headroom report from a UE. In other words, in step S1010, the gNB decides to trigger the UE to request a PHR. The gNB communication method further comprises step S1020 of transmitting a PHR request based on a result of the determination in step S1010, as well as a step S1040 of receiving the requested PHR.

Embodiments, examples and explanations in the present disclosure are to be understood to apply to each of the communication apparatus 610, base station 660, as well as to both corresponding communication methods.

The UE 610 receives the request for the PHR on a downlink channel and transmits the requested PHR on an uplink channel. In some embodiments to be described further, the gNB 660 transmits to the receiving UE 610 a control signal comprising the request for the PHR (which may also be called a "power headroom reporting request" or, for short, "PHR request"). The control signal may be a MAC CE, which is carried by a physical data channel or physical shared channel such as PDSCH, or Downlink Control Information (DCI) carried by a physical control channel (e.g. PDCCH).

The PHR, which the UE transmits to the network on the uplink, may be carried by an uplink MAC CE, in accordance with or similar to the description provided in the above-section on "Power headroom reporting". However, the present disclosure relates in particular to the network requesting of PHR reporting, and further provides embodiments related to the determination of resources for the PHR, and is not limited to a particular type or content of Power Headroom Report.

In the following, exemplary control signals for carrying the PHR request will be described, beginning with embodiments where the PHR request from the network is carried by a MAC CE.

### Dedicated MAC CE

As a first example, the control signal carrying the request for the PHR may be a downlink MAC CE exclusively dedicated for requesting the PHR. For instance, the MAC CE is dedicated for the purpose of requesting the MAC CE.

The dedicated MAC CE, which may be called "single-purpose MAC CE", is a MAC CE transmitted solely for the purpose of conveying the PHP request. For instance, the MAC CE only contains the indication of the PHR request. Needless to say, the MAC CE contains information needed for successful reception and processing of the MAC CE, such as header and protocol information, which is implicit in the control signal being a MAC CE. However, the dedicated MAC CE does not contain any further control signaling information, such as commands (for example activation/deactivation/selection), requests, or reports for purposes other than the PHR request.

The request in the dedicated MAC CE may contain an indicator, such as a multi-bit indicator or multi-bit flag, to request a PHR report. Based on the value of the multi-bit indication, the content of the report to be generated and transmitted by the UE may then be determined, e.g. picked, from a set of report settings configured by higher layer signaling (e.g. RRC configured) For instance, a plurality of PHR report types may be configured which differ (at least partially) in the content to be included in the report, or differ in whether they are based on an actual transmission or a reference transmission (e.g. virtual PH reporting), etc.

Alternatively, the PHR request may contain multiple fields (e.g. bit fields) indicating the content of the PHR report to be requested. For instance, the each of a plurality of fields may indicate respective information to be included in the request.

Carrying the PHR request via a dedicated control element or single-purpose may allow for a small size of the MAC CE. Furthermore, due to the single purpose, PHR may be requested by network with low latency.

### Piggybacking on MAC CE for other purpose

As a second example of a control signal, the control signal carrying the request for the PHR is a downlink MAC CE, which carries the request for the PHR in addition to control signaling information for control purposes different from the request for the PHR. In other words, the PHR request is carried or "piggybacked" by a MAC-CE for a purpose other than that of reporting PHR.

For instance, the PHR request may contain a multi-bit indicator or multiple fields as in the case of the dedicated MAC CE, whose content may be picked from a set of configured report settings by higher layer.

Alternatively, the PHR request may comprise a one-bit indicator indicating whether or not a PHR is requested.

As an example of control signaling information for control purposes different from PHR requesting, the MAC CE may carry a pathloss offset update by the network.

Piggybacking the PHR request on other control information signaling may facilitate reducing overhead. This may be the case in particular if the MAC CE is indicated by a bit indicator having one or a small number of bits.

Furthermore, a common control signal for the PHR request and the pathloss offset may contribute to a reduced overhead since PHR and pathloss offset update are related. For instance, a change in the received uplink power at a TRP may necessitate a pathloss offset update and may at the same time be a suitable trigger for a PHR request.

In the following, further several types of DCI will be described as further examples of control signals that may carry the PHR request. Each of the DCls in the following examples may contain a one-bit or multi-bit indicator of flag or multiple bit fields which have been described above in the description of MAC CEs carrying the PHR request from the network.

### DCI for Downlink Scheduling

As a third example, the control signal carrying the request for the PHR is a DCI for downlink scheduling.

For instance, the PHR request from the network may be carried via a DL scheduling DCI such as DCI format 1_1.

Carrying the PHR request in a downlink scheduling DCI may allow for a low overhead as no dedicated signal for the PHR request is needed. The signaling amount may further be reduced when only one or a small number of bits or a single bit is included in the DCI for requesting the PHR.

### DCI for Uplink Scheduling

As a fourth example, the control signal carrying the PHR request is a DCI for uplink scheduling.

For instance, the PHR request from the network may be carried via an uplink scheduling DCI, such as DCI format 0_1.

The uplink scheduling DCI may indicate an uplink resource grant for the PHR, which indicates resources (e.g. in frequency and/or time domain) for the UE to use for the transmission of the PHR.

Thus, using an uplink scheduling DCI allows for scheduling an uplink grant for the PHR together with request for the PHR in a common downlink signal. Thus, the transmission of an additional signal carrying the PHR request may be avoided.

### UE Group Common DCI

As a fifth example, the control signal carrying the PHR request is carried via a DCI different from a DCI for uplink scheduling and different from a DCI for downlink scheduling. A DCI for carrying control information other than UL or DL scheduling is referred to as UE group common (GC) signaling DCI and can be read by a plurality of UEs (a group of UEs) within a cell.

Carrying the PHR request in a group common DCI may allow for a low overhead. With a group-common DCI, the network may address multiple UEs at the same time to trigger the PHR reporting.

As described above, the present disclosure provides several embodiments and examples of downlink control signals, such as MAC CEs and DCls, which are sent from the network to the UE and which include a request for a PHR. It can be seen in the above description that the request for the PHR may for instance be indicated by a one-bit indicator (comprising one bit) or by a multi-bit indicator (comprising a plurality of bits). As mentioned, the one or more bits in the indicator may point to a configuration, e.g. configured by higher layer (such as RRC) and/or by a standard.

A multi-bit indicator (or multi-bit flag) may for instance indicate an index value from among a set of index value, wherein each index value in the set respectively points to a report (or type of report, set of report settings, or more generally, downlink control element (such as DL MAC CE)) from a configured set of reports, which may configured by higher-layer signaling (e.g. RRC) or by specification.

A one-bit indicator may indicate whether or not a power headroom report is requested. A first value (e.g. "1") indicates that the PHR is requested and a second value (e.g. "0") indicates that no PHR is requested. If the UE determines that the PHR is requested, it may generate a PHR report whose content or type is configured by higher layer, e.g. RRC, e.g. by a configured index from the above-mentioned set of index values pointing to a set of reports.

For instance, a one-bit indicator for indicating the PHR request may be provided in embodiments where the request is piggybacked on a MAC CE for another control purpose or included in a DCI, such as a DCI for UL scheduling, DL scheduling, or a GC signaling DCI. In such cases the usage of a one-bit indicator or bit flag, combined with the piggybacking approach, may allow for a low signaling overhead.

Alternatively, as mentioned above, the indication of the PHR request may comprise multiple bits, for example:

| | |
|---|---|
| *Type 1 or type 3---* | *1 bit* |
| *Actual or reference* --- | *1 bit* |
| *Include MPE info or not* ---- | *1 bit* |
| *(Etc.)* | |

In the following, embodiments and examples will be provided of how the UE determines the uplink resources for transmitting the PHR. In accordance with the present disclosure, the UE may determine the resources for transmitting the PHR from a control signal carrying the request for the PHR or from another control signal, and transmit the PHR on the resources determined accordingly. Resources for transmitting the PHR refer to physical resources such a time domain and/or frequency domain resources, and may include one or more further resources such as directional resources (e.g. beam), or code domain resources.

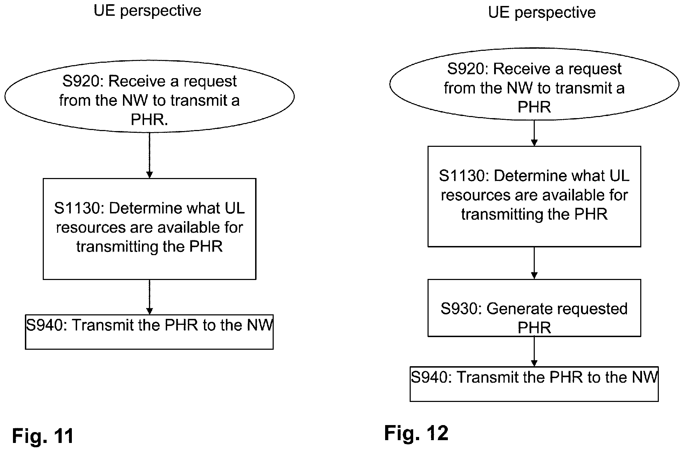

The determination by the UE regarding what UL resources are available for transmitting the PHR is shown as an additional method step in Figs. **11** and 12. In Fig. 11, the generation of the requested PHR (step S930 in Figs. 9 ad 12) is considered to be included in step S940 of transmitting the PHR and is not explicitly shown.

Thus, on the one hand, the DL control signal carrying the PHR request may further carry the UL grant for UL resources for transmitting the PHR. An example of the case where the resources for carrying the control signal are indicated within the same downlink control signal as the PHR request is the above-described uplink scheduling DCI.

On the other hand, the UE may receive another control signal different from the control signal carrying the request for the PHR, where the other control signal carries an uplink resource grant. The UE then transmits the PHR on uplink resources scheduled by the uplink resource grant.

This may be the case for the remaining types of control signal, namely MAC CE (dedicated for or piggybacking the PHR request), DL scheduling DCI, or UE GC signaling DCI. The UE may determine to transmit the PHR on available resources, e.g. the next available resources granted to the UE by an UL grant, which may be included in an UL scheduling DCI (which does not contain the MAC request) or a configured grant (e.g. semi-statically configured via RRC). It is noted that the control signal carrying the resource grant may be received by the UE before the PHR request, however, the present invention is not limited with respect to the order the signals are transmitted and received.

As described, the present disclosure describes an approach to PHR reporting where the base station, or more generally, the network, determines whether it needs a PHR from a UE, and triggers the UE by a downlink PHR request to transmit the PHR.

Such an approach is applicable, for instance, to scenarios where the network is capable of detecting changes in the received uplink power from the UE. With this capability, the network need not rely on changes in downlink pathloss PL_{DL} to trigger PHR transmission from UE to the network.

It is further noted that PHR requesting or triggering in accordance with the present application may be applied, but is not limited to, deployment scenarios with UL TRPs as shown in **Figs. 4** and 5 such as asymmetric DL sTRP/UL mTRP scenarios where the UL TRP is located at a spatial distance from the base station or from a DL TRP (DL only or bidirectional).

For instance, the base station may determine to request a PHR based on an uplink pathloss measured by an uplink TRP (e.g. an UL only TRP).

The base station may be a network node configured for controlling a plurality of TRPs, which may be provided at different locations and separated by spatial distance. The plurality of TRPs may include one or more UL TRPs (UL only) in addition to one or more DL TRPs (bidirectional or DL only). It is assumed that the base station or network node is able to receive information relevant for the decision on triggering a PHR from the other TRPs. For instance, the base station may be connected to the TRPs via a backhaul link, which may be assumed to be an ideal backhaul. For instance, an "ideal" backhaul link may be implemented by fiber optics such as waveguide. The base station may comprise a backhaul interface which, in operation, receives an indication of the uplink pathloss TRP. However, an indication of an uplink pathloss, on which the determination to transmit a PHR request is based, may also be received by the gNB transceiver. Further, it is noted that, the uplink pathloss may also be an uplink pathloss received at the transceiver of the base station.

In the case of UL TRPs, the present invention may facilitate PHR triggering in view of the consideration that the network, being aware of UL power, UL and possible changes in the UL power, can make use of this knowledge to decide on the need for PHR from a UE.

Moreover, as noted, the present disclosure is not limited to such UL TRP (or multi-TRP) deployment scenarios, but can also be applied to other deployment scenarios such as single-TRP cells or symmetric multi-TRP scenarios (with a plurality of TRPs having a DL with the UE). The triggering of PHR reporting by the network, rather than the UE may further facilitate saving UE power as the UE need not monitor changes in the DL pathloss to decide on transmission of PHR, or need not monitor a timer as in a case of period PHR transmission.

### (Open-RAN)

The base station described in each exemplary embodiment (for example, a 5G NR base station called gNB) may be formed of three functional modules: Centralized Unit (CU), Distributed Unit (DU), and Radio Unit (RU).

CU may also be referred as, for example, a centralized node, an aggregated node, a centralized station, an aggregated station, or a central unit. DU may also be referred as, for example, O-DU (O-RAN Distributed Unit), a distributed node, a distributed station, or a distributed unit. RU may also be referred as, for example, O-RU (O-RAN Radio Unit), a radio apparatus, a radio node, a radio station, an antenna unit, or a radio unit.

Several split options are defined for the functional split configuration (or functional split point) between CU, DU, and RU. The term "functional split point" may also be referred to as "split", "option", or "split option".

Examples of the "split option" include the following split options 1 to 8. The functionality of the base station described in each exemplary embodiment may be split into functions as CU, DU, and RU by one of the following split options 1 to 8. For example, each of CU, DU, and RU may be subjected to functional splitting or functional splitting only between CU and DU or only between DU and RU is possible.
(1) Split Option 1: between RRC (radio resource control) and PDCP
(2) Split Option 2: between PDCP and RLC (High-RLC)
(3) Split Option 3: between High-RLC and Low-RLC
(4) Split Option 4: between RLC (Low-RLC) and MAC (High-MAC)
(5) Split Option 5: between High-MAC and Low-MAC
(6) Split Option 6: between MAC (Low-MAC) and PHY (High-PHY)
(7) Split Option 7: between High-PHY and Low-PHY
(8) Split Option 8: between PHY (Low-PHY) and RF

The functional split point between CU and O-DU may be Split Option 2. The link between CU and O-DU is referred to as midhaul and the F1 interface is defined by the 3GPP. Further, the link between O-DU and O-RU is referred to as fronthaul and its functional split point may be Split Option 7-2x adopted as the O-RAN fronthaul specifications.

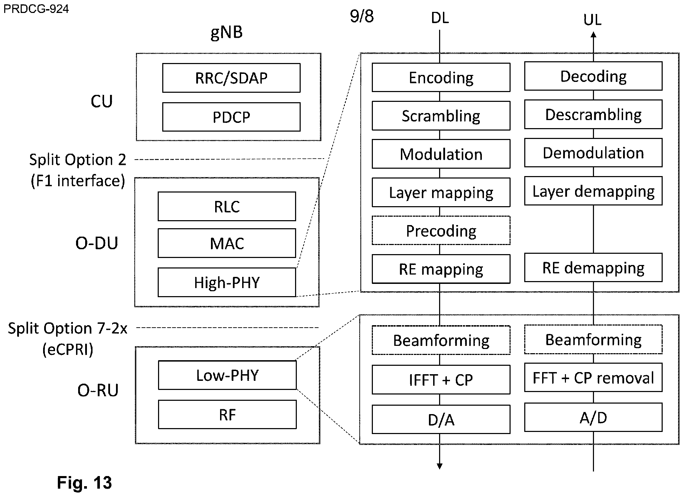

FIG. 13 illustrates an example in which the base station functionality of the gNB is subjected to functional splitting into CU, O-DU, O-RU by Split Option 2 and Split Option 7-2x.

CU may include, for example, an RRC (radio resource control) function, an SOAP (service data adaptation protocol) function, and a PDCP (packet data convergence protocol) function.

O-DU may include, for example, an RLC (radio link control) function, a MAC function, and a higher physical layer (HIGH-PHY) function. Further, the HIGH-PHY function may include an encoding function, a scrambling function, a modulation function, a layer mapping function, a precoding function, and an RE (resource element) mapping function for downlink (DL) transmission. The HIGH-PHY function may also include a decoding function, a descrambling function, a demodulation function, a layer demapping function, and an RE (resource element) demapping function for uplink (UL) reception.

O-RU may include, for example, a LOW-PHY function and an RF function. Further, the LOW-PHY function may include a beamforming function, IFFT (Inverse Fast Fourier Transform) + CP (Cyclic Prefix) addition functions, and a D/A (Digital to Analog) conversion function for downlink transmission. Further, the LOW-PHY function may include an A/D (Analog to Digital) conversion function, CP removal + FFT (Fast Fourier Transform) functions, and a beamforming function for uplink reception.

Note that, in a case where O-DU does not include the precoding function, O-RU may include the precoding function.

O-RU may include an LBT (listen before Talk)-related function.

eCPRI (Evolved Common Public Radio Interface) is defined as a communication scheme between O-DU and O-RU in Split Option 7-2x.

In Split Option 7-2x, a sampling sequence of the in-phase (I) and quadrature (Q) components of an OFDM signal in the frequency domain as well as information used for beamforming in the antenna, a time synchronization signal, and the like are transmitted and received by eCPRI.

Information transmitted by signals (PDCCH, PUCCH, PDSCH, PUSCH, MAC CE, RRC, and the like) described in each exemplary embodiment may be transmitted by using the User Plane (U-Plan) or Control Plane (C-Plane) of eCPRI between O-DU and O-RU.

In a case where a function described in each exemplary embodiment is executed in O-RU by function splitting, O-DU may control O-RU by transmitting information for controlling the function by means of a control signal (for example, eCPRI) between O-DU and O-RU.

In a case where a function described in each exemplary embodiment is executed by function splitting in O-DU, O-RU may receive a result of the execution of the function in O-DU by means of a control signal (for example, eCPRI) and may control O-RU based on the received result.

CU, O-DU, and O-RU may be deployed in physically different apparatuses, the respective functions of which are connected by optical fibers or the like, or some or all of the functions may be deployed in a physically identical apparatus.

CU and O-DU may be logical entities implemented as software operating on a server, such as a cloud, as a virtual Radio Access Network (vRAN). Further, some or all of the functions of CU and O-DU may be provided as services of a Network Functions Virtualization (NFV) function.

The transceiver may not be a radio transceiver and may be, for example, a network transceiver, an optical transceiver, or the like. The radio resource allocated by O-DU may be a resource for radio communication between O-RU and the UE.

### (SBFD)

Operations on uplink, downlink, and sidelink symbols in one exemplary embodiment of the present disclosure may be applied to symbols (for example, SBFD (Subband non-overlapping full duplex) symbols, Subband full duplex) on which an SBFD operation or control is performed. For SBFD symbols, the frequency domain (or frequency resource or frequency bandwidth) is divided into a plurality of frequency domains (also referred to as, for example, sub-bands, RB sets, sub-bandwidths, or sub-BWPs (Bandwidth parts)). The terminal performs transmission and reception in a direction (for example, a downlink or uplink direction) in units of sub-bands that are the divided domains. For SBFD symbols, the terminal may perform transmission/reception in one direction of uplink and downlink directions, and may not perform transmission/reception in the other direction. The base station, on the other hand, may be capable of performing both uplink and downlink transmissions/receptions simultaneously. SBFD symbols may have a fewer frequency domain usable for downlink compared to symbols for which only downlink transmission/reception is performed. Further, SBFD symbols may have a fewer frequency domain usable for uplink compared to symbol for which only uplink transmission/reception is performed.

Further, for SBFD symbols, the terminal may perform uplink and downlink transmissions/receptions simultaneously. At this time, the frequency domain transmitted by the terminal and the frequency domain received by the terminal may not be adjacent and a frequency interval (also referred to as a frequency gap) may be provided therebetween.

Further, sidelink transmission/reception may also be included as a transmission/reception direction in units of sub-bands which are the divided domains.

### (XDD: Cross Division Duplex)

Operations on uplink, downlink, and sidelink symbols in one exemplary embodiment of the present disclosure may be applied to symbols (for example, Full duplex symbols) on which a Full duplex operation or control is performed. For Full duplex symbols, both the terminal and the base station are capable of performing uplink and downlink transmissions/receptions simultaneously. For Full duplex symbols, the terminal and the base station may operate to perform transmission/reception simultaneously in available frequency domains (or frequency resources or frequency bandwidths) or may operate to perform transmission/reception simultaneously in one or some of frequency domains (that is, may operate to perform transmission or reception in the other frequency domains). At this time, the frequency domain transmitted by the base station or the terminal and the frequency domain received by the base station or the terminal may not be adjacent and a frequency interval (also referred to as a frequency gap) may be provided therebetween. Further, for example, for the purpose of reduction in interference or the like, one of the terminal and the base station may operate to perform transmission/reception simultaneously (that is, the other may operate to perform transmission or reception).

Further, the Full duplex operation may be applied to an operation in which the terminal is capable of performing sidelink transmission/reception simultaneously. Further, the Full duplex operation may be applied to an operation in which the terminal is capable of performing sidelink transmission/reception and uplink or downlink transmission/reception simultaneously.

### (Control Signals)

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

### (Base Station)

In the present disclosure, the base station may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well.

### (Uplink/Downlink/Sidelink)

The present disclosure may be applied to any of uplink, downlink and sidelink.

The present disclosure may be applied to, for example, uplink channels, such as PUSCH, PUCCH, and PRACH, downlink channels, such as PDSCH, PDCCH, and PBCH, and side link channels, such as Physical Sidelink Shared Channel (PSSCH), Physical Sidelink Control Channel (PSCCH), and Physical Sidelink Broadcast Channel (PSBCH).

PDCCH, PDSCH, PUSCH, and PUCCH are examples of a downlink control channel, a downlink data channel, an uplink data channel, and an uplink control channel, respectively. PSCCH and PSSCH are examples of a sidelink control channel and a sidelink data channel, respectively. PBCH and PSBCH are examples of broadcast channels, respectively, and PRACH is an example of a random access channel.

### (Data Channels/Control Channels)

The present disclosure may be applied to any of data channels and control channels. The channels in the present disclosure may be replaced with data channels including PDSCH, PUSCH and PSSCH and/or control channels including PDCCH, PUCCH, PBCH, PSCCH, and PSBCH.

### (Reference Signals)

In the present disclosure, the reference signals are signals known to both a base station and a mobile station and each reference signal may be referred to as a Reference Signal (RS) or sometimes a pilot signal. The reference signal may be any of a DMRS, a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

### (Time Intervals)

In the present disclosure, time resource units are not limited to one or a combination of slots and symbols, and may be time resource units, such as frames, superframes, subframes, slots, time slots, subslots, minislots, or time resource units, such as symbols, Orthogonal Frequency Division Multiplexing (OFDM) symbols, Single Carrier-Frequency Division Multiple Access (SC-FDMA) symbols, or other time resource units. The number of symbols included in one slot is not limited to any number of symbols exemplified in the embodiment(s) described above, and may be other numbers of symbols.

### (Frequency Bands)

The present disclosure may be applied to any of a licensed band and an unlicensed band.

### (Communication)

The present disclosure may be applied to any of communication between a base station and a terminal (Uu-link communication), communication between a terminal and a terminal (Sidelink communication), and Vehicle to Everything (V2X) communication. The channels in the present disclosure may be replaced with PSCCH, PSSCH, Physical Sidelink Feedback Channel (PSFCH), PSBCH, PDCCH, PUCCH, PDSCH, PUSCH, and PBCH.

In addition, the present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

### (Antenna Ports)

An antenna port refers to a logical antenna (antenna group) formed of one or more physical antenna(s). That is, the antenna port does not necessarily refer to one physical antenna and sometimes refers to an array antenna formed of multiple antennas or the like. For example, it is not defined how many physical antennas form the antenna port, and instead, the antenna port is defined as the minimum unit through which a terminal is allowed to transmit a reference signal. The antenna port may also be defined as the minimum unit for multiplication of a precoding vector weighting.

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

### Aspects

The present disclosure provides the following aspects.

Aspect 1: A communication apparatus, comprising: a transceiver, which, in operation, receives a request for a power headroom report, PHR; and circuitry, which, in operation, generates the requested PHR, wherein the transceiver, in operation, transmits the requested PHR.

Aspect 2: The communication apparatus according to aspect 1, wherein the transceiver, in operation, receives a control signal carrying the request for the PHR, the control signal being a downlink medium access control (MAC) control element (CE) or downlink control information (DCI).

Aspect 3: The communication apparatus according to aspect 2, wherein the control signal carrying the request for the PHR is a downlink MAC CE exclusively dedicated for requesting the PHR.

Aspect 4: The communication apparatus according to aspect 2, wherein the control signal carrying the request for the PHR is a downlink MAC CE carrying the request for the PHR in addition to control signaling information for control purposes different from the request for the PHR.

Aspect 5: The communication apparatus according to aspect 4 wherein the control signaling information for control purposes different from the PHR is a pathloss offset update.

Aspect 6: The communication apparatus according to aspect 2, wherein the control signal carrying the request for the PHR is a DCI for downlink scheduling.

Aspect 7: The communication apparatus according to aspect 2, wherein the control signal carrying the request for the PHR is a user equipment, UE, Group Common signaling DCI.

Aspect 8: The communication apparatus according to any one of aspects 2 to 7, wherein transceiver, in operation, receives another control signal different from the control signal carrying the request for the PHR, the other control signal carrying an uplink resource grant, and transmits the PHR on uplink resources scheduled by the uplink resource grant.

Aspect 9: The communication apparatus according to aspect 2, wherein the control signal carrying the request for the PHR is a DCI for uplink scheduling.

Aspect 10: The communication apparatus according to aspect 9, wherein the DCI for uplink scheduling includes an uplink resource grant for the PHR.

Aspect 11: The communication apparatus according to aspect 1, wherein the circuitry, in operation, determines uplink resources available for transmitting the PHR from a control signal carrying the request for the PHR or from another control signal; and the transceiver, in operation, transmits the PHR on the determined uplink resources available for transmitting the PHR.

Aspect 12: The communication apparatus according to any one of aspects 1 to 11, wherein the request for the PHR is indicated by a one-bit indicator or a multi-bit indicator.

Aspect 13. A base station, comprising: circuitry which, in operation, determines to request a power headroom report, PHR; and a transceiver which, in operation, transmits a request for the PHR based on a result of the determination, and receives the requested PHR.

Aspect 14: The base station according to aspect 13, wherein the transceiver, in operation, transmits a control signal carrying the request for the PHR, the control signal being a downlink medium access control (MAC) control element (CE) or downlink control information (DCI).

Aspect 15: The base station according to aspect 14, wherein the control signal carrying the request for the PHR is a downlink MAC CE exclusively dedicated for requesting the PHR.

Aspect 16: The base station according to aspect 14, wherein the control signal carrying the request for the PHR is a downlink MAC CE carrying the request for the PHR in addition to control signaling information for control purposes different from the request for the PHR.

Aspect 17: The base station according to aspect 14 wherein the control signaling information for control purposes different from the PHR is a pathloss offset update.

Aspect 18: The base station according to aspect 14, wherein the control signal carrying the request for the PHR is a DCI for downlink scheduling.

Aspect 19: The base station according to aspect 14, wherein the control signal carrying the request for the PHR is a user equipment, UE, Group Common signaling DCI.

Aspect 20: The base station according to any one of aspects 14 to 19, wherein transceiver, in operation, transmits another control signal different from the control signal carrying the request for the PHR, the other control signal carrying an uplink resource grant, and receives the PHR on uplink resources scheduled by the uplink resource grant.

Aspect 21: The base station according to aspect 14, wherein the control signal carrying the request for the PHR is a DCI for uplink scheduling.

Aspect 22: The base station according to aspect 21, wherein the DCI for uplink scheduling includes an uplink resource grant for the PHR.

Aspect 23: The base station according to aspect 13, wherein the circuitry, in operation, determines uplink resources available for transmitting the PHR; includes an indication of the determined uplink resources in the control signal carrying the request for the PHR or transmits another control signal carrying the indication of the determined uplink resources; and the transceiver, in operation, receives the PHR on the indicated uplink resources available for transmitting the PHR.

Aspect 24: base station apparatus according to any one of aspects 13 to 23, wherein the request for the PHR is indicated by a one-bit indicator or a multi-bit indicator.

Aspect 25: A communication method for a communication apparatus comprising the steps of: receiving a request for a power headroom report, PHR; generating the requested PHR; and transmitting the requested PHR.

Aspect 25 may be provided in combination with features of any one of aspects 2 to 12.

Aspect 26: A communication apparatus for a base station, comprising: determining to request a power headroom report, PHR; transmitting a PHR request based on a result of the determination; and receiving the requested PHR.

Aspect 26 may be provided in combination with features of any one of aspects 14 to 24.

Further provided are an integrated circuit configured for controlling a communication device, to carry out the communication method according to aspect 25, and an integrated circuit for controlling a base station to carry out the communication method according aspect 26.

In addition, a non-transitory medium is provided storing program instructions which, when executed on a processing circuitry such as a general purpose processor, cause the processing circuitry to perform all steps of the above mentioned method embodiments or aspects.

## Claims

1. A communication apparatus, comprising:
a transceiver, which, in operation, receives a request for a power headroom report, PHR; and
circuitry, which, in operation, generates the requested PHR, wherein
the transceiver, in operation, transmits the requested PHR.

2. The communication apparatus according to claim 1, wherein the transceiver, in operation, receives a control signal carrying the request for the PHR, the control signal being a downlink medium access control (MAC) control element (CE) or downlink control information (DCI).

3. The communication apparatus according to claim 2, wherein the control signal carrying the request for the PHR is a downlink MAC CE exclusively dedicated for requesting the PHR.

4. The communication apparatus according to claim 2, wherein the control signal carrying the request for the PHR is a downlink MAC CE carrying the request for the PHR in addition to control signaling information for control purposes different from the request for the PHR.

5. The communication apparatus according to claim 4 wherein the control signaling information for control purposes different from the PHR is a pathloss offset update.

6. The communication apparatus according to claim 2, wherein the control signal carrying the request for the PHR is a DCI for downlink scheduling.

7. The communication apparatus according to claim 2, wherein the control signal carrying the request for the PHR is a user equipment, UE, Group Common signaling DCI.

8. The communication apparatus according to any one of claims 2 to 7, wherein transceiver, in operation, receives another control signal different from the control signal carrying the request for the PHR, the other control signal carrying an uplink resource grant, and transmits the PHR on uplink resources scheduled by the uplink resource grant.

9. The communication apparatus according to claim 2, wherein the control signal carrying the request for the PHR is a DCI for uplink scheduling.

10. The communication apparatus according to claim 9, wherein the DCI for uplink scheduling includes an uplink resource grant for the PHR.

11. The communication apparatus according to claim 1, wherein
the circuitry, in operation, determines uplink resources available for transmitting the PHR from a control signal carrying the request for the PHR or from another control signal; and
the transceiver, in operation, transmits the PHR on the determined uplink resources available for transmitting the PHR.

12. The communication apparatus according to any one of claims 1 to 11, wherein the request for the PHR is indicated by a one-bit indicator or a multi-bit indicator.

13. A base station, comprising:
circuitry which, in operation, determines to request a power headroom report, PHR; and
a transceiver which, in operation, transmits a request for the PHR based on a result of the determination, and receives the requested PHR.

14. A communication method for a communication apparatus comprising the steps of:
receiving a request for a power headroom report, PHR;
generating the requested PHR; and
transmitting the requested PHR.

15. A communication apparatus for a base station, comprising:
determining to request a power headroom report, PHR;
transmitting a PHR request based on a result of the determination; and
receiving the requested PHR.
